# EUROPEAN PATENT SPECIFICATION

(11) **EP 2 232 137 B1**
(45) Date of publication and mention of the grant of the patent: **18.09.2019**
(21) Application number: 09702505.0
(22) Date of filing: 15.01.2009
(51) Int. Cl.: F23C 7/00, F23C 9/08, F23L 7/00, F23D 14/32

(54) **METHOD FOR IMPLEMENTING AN OXYCOMBUSTION**
VERFAHREN ZUR DURCHFÜHRUNG EINER SAUERSTOFFVERBRENNUNG
PROCÉDÉ DE MISE EN UVRE D'UNE OXYCOMBUSTION

(30) Priority: 17.01.2008 EP 08305006
(43) Date of publication of application: 29.09.2010
(73) Proprietor: L'Air Liquide Société Anonyme pour l'Etude et l'Exploitation des Procédés Georges Claude, 75007 Paris (FR)
(72) Inventor: SANCHEZ-MOLINERO, Ivan, F-78000 Versailles (FR); LAURENT, Jacky, F-78210 Saint Cy L'ecole (FR); MULON, Jacques, F-91300 Massy (FR); PAUBEL, Xavier, F-92290 Chatenay Malabry (FR); RECOURT, Patrick, Jean-Marie, F-91460 Marcoussis (FR); TSIAVA, Rémi, Pierre, F-91250 Saint Germain - Les - Corbeil (FR)
(74) Representative: De Vleeschauwer, Natalie Y.L.D.
(86) International application number: PCT/EP2009/050454
(87) International publication number: WO 2009/090232

(56) References cited:
- EP-A- 0 644 374
- EP-A- 1 517 085
- WO-A-2004/029511
- WO-A1-92/06328
- DE-A1-102006 011 326
- US-A- 4 412 810
- US-A- 4 545 307

## Description

The present invention relates to a combustion method which can make use of a high-oxygen-content gas.

With the increasingly stringent environmental restrictions, particularly in terms of the production of CO₂ and NOₓ, the combustion of a fuel using oxygen or a high-oxygen-content gas is becoming increasingly attractive for the combustion of fossil fuels in all kinds of industry fields, where thermal fluids such as steam, hot water or hot oil, and/or electricity and/or mechanical work are needed. However, the conventional combustion devices using air as oxidizer do not always have the geometry, nor the requisite materials, for operating with oxygen or a high-oxygen-content gas. This is because the absence of the nitrogen ballast in high-oxygen or all-oxygen combustion significantly modifies the heat transfer modes, the species concentrations, and the pressure conditions in the combustion chamber.

In order to operate with all-oxygen combustion in these installations, one proposed solution is to reinject flue gas produced by the said combustion or another combustion to partly make up for the absence of nitrogen. This procedure serves to avoid a high production of NOₓ due both to the absence of nitrogen, and also to a lower flame temperature than in all-oxygen combustion. However, the reinjected flue gas often nullifies the benefits of oxycombustion, such as, in particular, the lower proportion of unburnts from heavy oil residues, or the decrease of part of the ash, these unburnts and this ash then causing complications in the downstream flue gas treatment method.

This flue gas injection can be made essentially in two ways. First, by mixing the said flue gas with oxygen before its introduction into the burner, so as to reconstitute an oxidizer comprising about 21 to 27% oxygen and the remainder essentially consisting of CO₂ instead of nitrogen. One advantage that can be found for this solution in the case of a conversion of an air boiler is the possibility of retaining the air burners with minor operating adjustments. The premixing of the flue gases with the oxygen before their introduction into the burner may give rise to safety problems. To avoid this problem, in a second alternative, the flue gas can also be injected separately, either at a location of the combustion chamber, or through the burner. In the latter case, the flue gas is injected at a velocity such as to lengthen the flame, which may overheat the elements of the combustion chamber (opposite wall or tubes, in the case of a boiler). To avoid this problem, the flue gas injection velocities must be low, which has the effect of increasing the size of the burner and of creating layout problems, whereas it is well known that the surface areas of the combustion chamber must be maximized.

The preceding problems therefore imply the need to improve the methods which make use of flue gas recycling.

Furthermore, practice demonstrates the utility of being able to use the combustion burners in flexible mode, that is, alternately in oxycombustion and in air combustion. In fact, owing to the restrictions in oxygen availability and/or safety problems, it may be useful to be able to convert an oxycombustion into air combustion without replacing the burner. Similarly, for certain types of combustion, it is preferable to start the combustion with air and then switch to oxycombustion for safety reasons. Oxycombustion methods are known from DE102006011326 A, WO2004/029511 or EP1517085 A.

It is therefore the object of the present invention to propose a method suitable for implementing an oxycombustion with flue gas recycle in a device designed for an air combustion.

A further object of the present invention is to propose a combustion method suitable for implementing an oxycombustion with flue gas recycle.

A further object of the present invention is to propose a combustion method suitable for implementing an oxycombustion with flue gas recycle the said combustions producing a flame having a controlled size.

For this purpose, the invention relates to a method of combustion of at least one fuel using at least one oxygen containing gas and one mainly inert gas, in which:
- the said oxygen containing gas comprises at least 80% of oxygen in volume,
- the said fuel and the said oxygen containing gas are injected in such a way as to create a flame,
- the said mainly inert gas is injected in such a way that it is contiguous to and surrounds the flame created by the said fuel and the said oxygen containing gas and that it has a divergent swirl with regard to the flame.

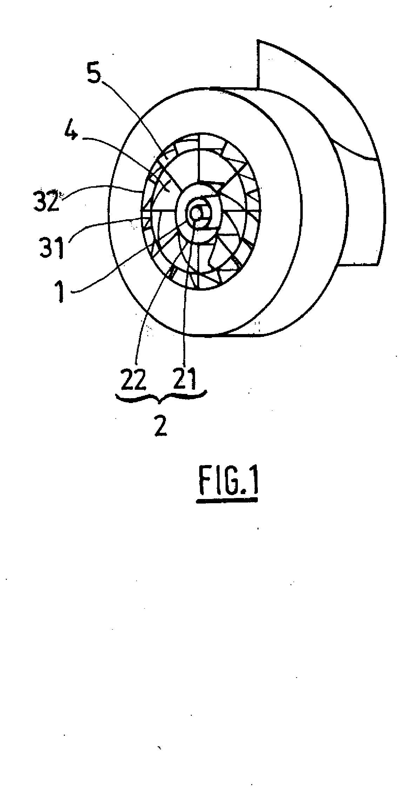

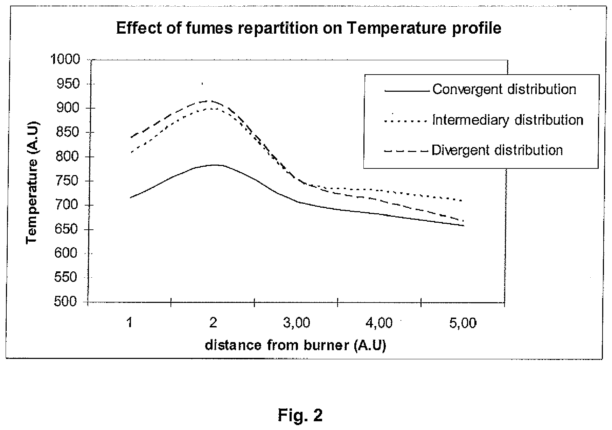

Other features and advantages of the invention will appear from a reading of the description that follows. Embodiments of the invention are provided as non-limiting examples, illustrated by the Figure 1 which is a schematic view of a burner.

The method according to the invention implements the main combustion of a fuel by an oxygen containing gas. The fuel may be any gaseous, liquid, solid, slurry, emulsion, or any combination thereof. If it is a gas, the fuel may be, but is not limited to, natural gas, mine gas, coke oven gas, blast furnace gas, refinery gas, low heating value gas, gassified solid fuel, or syngas. If it is a liquid, the fuel may be, but is not limited to, home-heating oil, heavy fuel oil, asphalt, refinery residue or crude oil. If it is a solid, the fuel may be, but is not limited to, coal, coke, petroleum coke, biomass, peat, solid asphalt, or solid refinery residue. These various types of fuels are injected in such a way as to form a flame with the oxygen containing gas. The injections of the fuel or fuels and the oxygen containing gas can be made in any manner known to a person skilled in the art in order to produce a flame. According to the method of the invention, a mainly inert gas is also injected. The mainly inert gas comprises at least one of the following compounds: CO₂, H₂O, Ar, in a molar quantity of at least 50%. The mainly inert gas may be or comprise a flue gas.

The mainly inert gas is injected in the form of a single jet. This single jet surrounds the flame created by the fuel and the oxygen containing gas. In the context of the present invention, "surround" means the fact that this jet of mainly inert gas encircles the central flame of the fuel and the oxygen containing gas. According to a preferred embodiment, the jet of mainly inert gas has the shape of a ring centred on the flame of fuel and oxygen containing gas.

According to the invention, the single peripheral jet has a divergent swirl with regard to the flame of fuel and oxygen containing gas. In the context of the present invention, swirl of a jet means a swirl movement of the jet about itself. The single peripheral jet is therefore a jet swirling about itself. Since the said jet surrounds the flame of fuel and oxygen containing gas, the said single peripheral jet is also swirling about the said flame. According to the invention, this swirl is divergent, that is, in the single peripheral jet, the mainly inert gas moves away from the flame of fuel and oxygen containing gas as it is injected.

For the single peripheral jet, the swirl rate of this jet of mainly inert gas is advantageously between 0.26 and 1.73. The swirl rate S is defined as follows: S = It/la, where It and la are respectively the tangential and axial pulses of the fluid swirled in a jet.

The method is particularly suited for use in boilers.

In the context of the present invention, oxygen-containing gas preferably means a gas having an oxygen concentration above 90% in volume. According to this embodiment, the oxidizer is an oxygen-containing gas and the mainly inert gas is composed of the flue gases from a combustion. The flue gases from a combustion generally comprise mainly, if not exclusively, CO₂. These gases may also comprise H₂O. Preferably, the mainly inert gas consists at least partly of the gases issuing from the combustion of the present method and which are recycled during the combustion method. In this case, the flue gases are recycled outside the combustion chamber in which the present method is implemented. They may be treated before being recycled. In general, at least 4 Sm³ of flue gases are recycled during the method according to the invention. Furthermore, the gases issuing from a combustion injected in the form of the single peripheral jet do not disturb the flame issuing from the combustion of the fuel and of the oxygen-containing gas, but create a corridor close to the nose of the burner which protects the walls of the combustion chamber from excessively intense radiation. Beyond the burner nose, the gases issuing from a combustion and injected in the form of the single peripheral jet and the hot gases issuing from the actual combustion of the method, are mixed to form only one uniform mixture.

One burner suitable for implementing the said method comprises:
- at least one means for injecting said fuel and at least one means for injecting said oxygen containing gas comprising at least 80% of oxygen in volume, the said means being placed with regard to one another in such a way that the oxygen containing gas and the fuel are capable of producing a flame,
- a means for injecting said mainly inert gas:
- said means for injecting the said mainly inert gas being suitable for injecting it in the form of a jet contiguous to and surrounding the flame produced by the said oxygen containing gas and the said fuel, and said means for injecting the said mainly inert gas comprising a means suitable for divergently swirling the flow of said mainly inert gas passing through it.

The burner comprises a first central part comprising at least one means for injecting fuel and at least one means for injecting the oxygen containing gas. These two injection means must be positioned with regard to one another in such a way that the oxygen containing gas and fuel are capable of producing a flame when the burner operates. Thus the means for injecting fuel and oxygen containing gas may be coaxial tubes or separate tubes. Any known technique for injecting fuel and oxygen containing gas in order to form a flame can be used.

The burner comprises a second peripheral part consisting of a means for injecting mainly inert gas. Preferably, the means suitable for divergently swirling the flow of mainly inert gas passing through the injection means causes the said flow to swirl with a swirl rate of between 0.26 and 1.73. The said means suitable for divergent swirling is generally a deflector.

According to a particular embodiment, the burner is such that:
- the means for injecting mainly inert gas comprises two coaxial tubes centred around the means for injecting fuel and the means for injecting an oxygen containing gas, the space between the two tubes allowing the passage of part of the mainly inert gas and comprising the means suitable for divergently swirling the flow of mainly inert gas passing through it.

According to this particular embodiment, the burner may also comprise two means for injecting oxygen containing gas, the said means being coaxial tubes, and the means for injecting fuel may be a metal ring drilled with at least one ring of orifices, the said metal ring being coaxial with the oxygen containing gas injection tubes and placed between the said tubes. The burner is then composed of four coaxial tubes and the metal ring drilled with orifices arranged in a ring, the said ring being placed between the smallest tube and the tube having the immediately larger diameter.

The burner may comprise two distinct means for injecting fuel for the injection of two different fuels.

Figure 1 shows the end of a burner. It comprises a first central part consisting of:
- fuel injection means 1 which is a tube,
- oxygen containing gas injection means 2 which comprises two tubes 21 and 22: one 21 is placed at the centre of the fuel injection tube 1 and the other 22 around the same fuel injection tube 1.

The burner also comprises a second part which is a means for injecting mainly inert gas; it comprises two coaxial tubes 22, 31, centred on the first central part, the smallest tube corresponding to the tube 22 for injecting fuel 1. The space between the intermediate tube 31 and the smallest tube 22 comprises means 5 (fins) suitable for divergently swirling the flow of mainly inert gas passing through it.

One advantage of the burner and of the combustion method according to the invention is that they produce a flame having a controlled size, which is useful in confined vessels, such as boiler combustion chambers in which the direct contact of the excessively long flame with bare steel tubes is fatal. In this latter case, the geometry of the flame produced by the burner according to the invention allows a uniform distribution of the heat flux on all the inner surfaces of the boiler; a boiler equipped with this burner operating in oxycombustion can withstand an energy density of up to 0.600 MW/m³ depending on the proportion of flue gas recycled.

A further advantage of the burner and of the combustion method according to the invention operating with an oxygen-containing gas is that they produce a flame having a high core temperature, whereby the unburnts are significantly decreased.

This invention may comprise one or more of the following features :
The fuel may be gaseous, liquid, solid, a slurry, an emulsion, solid in gas suspension, or any combination of the above. Three or more different fuels may be simultaneously injected. The fuel is injected through two or more orifices and the oxygen containing gas is injected through two or more orifices. The oxygen containing gas is injected through two or more orifices. The injection of the oxygen containing gas is staged between primary and secondary oxygen. A single set of orifices may be utilized to inject two or more different fuels. The flue gas temperature is maintained at a temperature greater than the acid dew point temperaure.
The pressure drop that either the fuel stream, oxygen containing gas stream, or both, experiences upon passing through the burner may be no more than 200 mbar. The pressure drop that the mainly inert gas experiences when passing through the burner may be between 4 mbar and 10 mbar. The mainly inert gas injection means may be fabricated from HR 160, or another Hastelloy-type alloy, if the fuel has a high sulphur content. The mainly inert gas injection means may be fabricated from 316 stainless steel if the fuel is relativel sulphur free. The means for injecting oxidant and fuel may be fabricated from inconel 600. A boiler my comprise at least one burner in accordance with this design.
The oxidizer is an oxygen-containing gas and the mainly inert gas is composed of the gases issuing from a combustion of said method and recyled, wherein the rate of recycling varies from 0.1 to 5.0, preferably 1.5. In this document, the rate of recycling is defined as the ratio (x/y) of the volume flowrate of the flue gas that is recycled (x) to the volume flowrate of the flue gas that exits the system through the stack (y).
In
another embodiment, the method of combustion according to the invention is used to produce at least one thermal fluid, for example steam, hot water or hot oil and/or electricity and /or mechanical work.

## Claims

1. Method of combustion of at least one fuel using at least one oxygen containing gas and one mainly inert gas, in which:
- the said oxygen containing gas comprises at least 80% of oxygen in volume,
- the said mainly inert gas comprises at least 50 mole % of at least one of the compounds CO₂, H₂O, Ar,
whereby
- the said fuel and the said oxygen containing gas are injected in such a way as to create a flame,
- the said mainly inert gas is injected in a single jet which is contiguous to and surrounds the flame created by the said fuel and the said oxygen containing gas and has a divergent swirl with regard to the flame.

2. Method according to one of the preceding claims, **characterized in that** the fuel may be gaseous, liquid, solid, a slurry, an emulsion, a solid in gas suspension, or any combination of the above.

3. Method according to one of the preceding claims, **characterized in that** 3 or more different fuels are simultaneously injected.

4. Method according to one of the preceding claims, **characterized in that** the oxygen containing gas is injected through two or more orifices.

5. Method according to claim 4, **characterized in that** the fuel is injected through two or more orifices.

6. Method according to one of the preceding claims, **characterized in that** the injection of the oxygen containing gas is staged between primary and secondary oxygen.

7. Method according to one of the preceding claims, **characterized in that** a single set of orifices is utilized to inject two or more different fuels.

8. Method according to any one of the preceding claims, whereby the mainly inert gas comprises or is a flue gas.

9. Method according to one of the preceding claims, whereby the oxygen containing gas comprises at least 90% of oxygen in volume.

10. Method according to one of the preceding claims, **characterized in that** the mainly inert gas is composed of the gases issuing from a combustion of said method which are recyled, wherein the rate of recycling varies from 0.1 to 5.0, preferably 1.5.

11. Use of the method of combustion according to claim 1 to 10 in order to produce at least one thermal fluid, for example steam, hot water or hot oil and/or electricity and /or mechanical work.

## Patentansprüche

1. Verfahren zur Verbrennung von mindestens einem Brennstoff unter Verwendung von mindestens einem sauerstoffhaltigen Gas und einem hauptsächlich inerten Gas, in dem:
- das sauerstoffhaltige Gas mindestens 80 % Sauerstoff im Volumen umfasst,
- das hauptsächlich inerte Gas mindestens 50 Mol-% von mindestens einer der Verbindungen CO₂, H₂O, Ar umfasst,
wobei
- der Brennstoff und das sauerstoffhaltige Gas so eingespritzt werden, dass eine Flamme erzeugt wird,
- das hauptsächlich inerte Gas in einem Einzelstrahl eingespritzt wird, der an die Flamme, die von dem Brennstoff und dem sauerstoffhaltigen Gas erzeugt wird, angrenzt und diese umgibt und einen divergenten Drall in Bezug auf die Flamme aufweist.

2. Verfahren nach einem der vorstehenden Ansprüche, **dadurch gekennzeichnet, dass** der Brennstoff gasförmig, flüssig, fest, ein Schlamm, eine Emulsion, ein Feststoff in Gassuspension oder eine beliebige Kombination der Obigen sein kann.

3. Verfahren nach einem der vorstehenden Ansprüche, **dadurch gekennzeichnet, dass** 3 oder mehr unterschiedliche Brennstoffe gleichzeitig eingespritzt werden.

4. Verfahren nach einem der vorstehenden Ansprüche, **dadurch gekennzeichnet, dass** das sauerstoffhaltige Gas durch zwei oder mehr Öffnungen eingespritzt wird.

5. Verfahren nach Anspruch 4, **dadurch gekennzeichnet, dass** der Brennstoff durch zwei oder mehr Öffnungen eingespritzt wird.

6. Verfahren nach einem der vorstehenden Ansprüche, **dadurch gekennzeichnet, dass** das Einspritzen des sauerstoffhaltigen Gases zwischen primärem und sekundärem Sauerstoff abgestuft ist.

7. Verfahren nach einem der vorstehenden Ansprüche, **dadurch gekennzeichnet, dass** ein einzelner Satz von Öffnungen zum Einspritzen von zwei oder mehr unterschiedlichen Brennstoffen verwendet wird.

8. Verfahren nach einem der vorstehenden Ansprüche, wobei das hauptsächlich inerte Gas ein Rauchgas umfasst oder ist.

9. Verfahren nach einem der vorstehenden Ansprüche, wobei das sauerstoffhaltige Gas mindestens 90 % Sauerstoff im Volumen umfasst.

10. Verfahren nach einem der vorstehenden Ansprüche, **dadurch gekennzeichnet, dass** das hauptsächlich inerte Gas aus den Gasen besteht, die aus einer Verbrennung des Verfahrens hervorgehen, die recycelt werden, wobei die Recyclingrate variiert von 0,1 bis 5,0, vorzugsweise 1,5.

11. Verwendung des Verfahrens zur Verbrennung nach Anspruch 1 bis 10, um mindestens ein Wärmefluid, zum Beispiel Dampf, heißes Wasser oder heißes Öl und/oder Elektrizität und/oder mechanische Arbeit zu produzieren.

## Revendications

1. Procédé de combustion d'au moins un combustible en utilisant au moins un gaz contenant de l'oxygène et un gaz principalement inerte, dans lequel :
- ledit gaz contenant de l'oxygène comprend au moins 80 % d'oxygène en volume,
- ledit gaz principalement inerte comprend au moins 50 % en mole d'au moins l'un des composés CO₂, H₂O, Ar,
dans lequel :
- ledit combustible et ledit gaz contenant de l'oxygène sont injectés de manière à créer une flamme,
- ledit gaz principalement inerte est injecté en un seul jet qui est contigu et entoure la flamme créée par ledit combustible et ledit gaz contenant de l'oxygène et a un tourbillon divergent par rapport à la flamme.

2. Procédé selon l'une quelconque des revendications précédentes, **caractérisé en ce que** le combustible peut être gazeux, liquide, solide, une suspension, une émulsion, une suspension de solides dans du gaz ou une combinaison quelconque de ces types.

3. Procédé selon l'une quelconque des revendications précédentes, **caractérisé en ce que** trois ou plus de différents combustibles sont simultanément injectés.

4. Procédé selon l'une quelconque des revendications précédentes, **caractérisé en ce que** le gaz contenant de l'oxygène est injecté à travers deux ou plus d'orifices.

5. Procédé selon la revendication 4, **caractérisé en ce que** le combustible est injecté à travers deux ou plus d'orifices.

6. Procédé selon l'une quelconque des revendications précédentes, **caractérisé en ce que** l'injection du gaz contenant de l'oxygène est étagée entre de l'oxygène primaire et de l'oxygène secondaire.

7. Procédé selon l'une quelconque des revendications précédentes, **caractérisé en ce qu'**une seul ensemble d'orifices est utilisé pour injecter deux ou plus de combustibles différents.

8. Procédé selon l'une quelconque des revendications précédentes, dans lequel le gaz principalement inerte comprend ou est un gaz de fumée.

9. Procédé selon l'une quelconque des revendications précédentes, dans lequel le gaz contenant de l'oxygène comprend au moins 90 % d'oxygène en volume.

10. Procédé selon l'une quelconque des revendications précédentes, **caractérisé en ce que** le gaz principalement inerte est composé des gaz issus d'une combustion dudit procédé qui sont recyclés, dans lequel le taux de recyclage varie de 0,1 à 5,0 ou est de préférence de 1,5.

11. Utilisation du procédé de combustion selon les revendications 1 à 10 pour produire au moins un fluide thermique, par exemple de la vapeur d'eau, de l'eau chaude ou de l'huile chaude et/ou de l'électricité et/ou un travail mécanique.
